# EUROPÄISCHE PATENTANMELDUNG

(11) **EP 1 903 235 A2**
(43) Veröffentlichungstag der Anmeldung: **26.03.2008**
(21) Anmeldenummer: 07016249.0
(22) Anmeldetag: 20.08.2007
(51) Int. Cl.: F16D 23/12, F16D 25/08

(54) **Anordnung zum Betätigen einer Kupplung eines Fahrzeuges**

(30) Priorität: 23.09.2006 DE 102006045011
(71) Anmelder: LuK Lamellen und Kupplungsbau Beteiligungs KG, 77815 Bühl (DE)
(72) Erfinder: Leger, Frèdèric, 28140 Terminiers (FR); Lecointre, Jean-Michel, 45450 Donnery (FR)

(57) **Zusammenfassung**

Die Erfindung bezieht sich auf eine einfach aufgebaute Anordnung zum Betätigen einer Kupplung eines Fahrzeuges, die ohne Energiespeicher die aufzuwendende Pedalkraft reduziert und gleichzeitig das Pedalgefühl dadurch verbessert, in dem der Kolben des Geberzylinders (2) innerhalb der hydraulischen Strecke einer Ausrückvorrichtung für eine Kupplung mit der Kontur (5a) eines Konturenelements (5) in Wirkverbindung steht, dessen Drehpunkt auf der gleichen Welle liegt wie der Drehpunkt des Kupplungspedals (1).

## Beschreibung

Die Erfindung bezieht sich auf eine Anordnung zum Betätigen einer Kupplung nach dem Oberbegriff des Anspruchs 1.

Aus der DE 101 04 665 A1 ist über eine hydraulische Strecke betätigbare Ausrückvorrichtung für eine hydraulisch betätigte Kupplung eines Kraftfahrzeuges bekannt. Diese weist einen mit der hydraulischen Strecke verbundenen Energiespeicher auf. Der Energiespeicher ist mit einem Pedal über eine Vorrichtung zum Übertragen und Wandeln einer Drehbewegung verbunden, mit welcher sich eine Anpassung der Pedalkräfte am Pedalweg erzielen lässt. Auf diese Weise lässt sich die Pedalkraft entlang der zweiten Hälfte des Pedalweges spürbar verringern, um die in der Kupplung des Kraftfahrzeuges wirkende maximale Federkraft gegen Ende des Pedalweges leichter überwinden zu können.

Bei einer Ausführung dieser Ausrückvorrichtung steht ein Ende des Energiespeichers mit einem zwischen diesem und einem Ausleger des Kupplungspedals schwenkbar angeordneten Hebel in Wirkverbindung. An diesem Hebel ist eine Abrollkurve vorgesehen, auf welcher eine am Ausleger des Kupplungspedals angeordnete Rolle ablaufen kann. Nach Überwindung eines Totpunktes läuft diese Rolle auf der Abrollkurve entlang und erfährt eine Unterstützungskraft durch den Energiespeicher, so dass die aufzubringende Pedalkraft verringert wird.

Das andere Ende des Energiespeichers stützt sich am Gehäuse des Geberzylinders ab, das so ausgebildet ist, dass dieses im Kontaktbereich zum Ende des Energiespeichers eine Abrollkurve aufweist. Die den Kolben des Geberzylinders betätigende Kolbenstange ist durch einen Stößel ersetzt worden, dessen Ende jeweils als Kugelkopf ausgebildet ist, wobei der eine Kugelkopf mit dem Kolben des Geberzylinders in Verbindung steht und der andere mit dem Pedal verbunden ist.

Die Aufgabe der vorliegenden Erfindung besteht darin, eine einfach aufgebaute Anordnung zum Betätigen einer Kupplung eines Fahrzeuges der eingangs genannten Gattung vorzuschlagen, die ohne zusätzlichen Energiespeicher die aufzuwendende Pedalkraft reduziert und gleichzeitig das Pedalgefühl verbessert.

Diese Aufgabe wird durch eine Anordnung zum Betätigen einer Kupplung eines Fahrzeuges mit den Merkmalen des Anspruchs 1 gelöst.

Danach besteht die erfindungsgemäße Anordnung aus einem auf einer Welle und um deren Drehpunkt schwenkbar angeordnetem Kupplungspedal, dessen Schwenkbewegung über ein Getriebe auf einen Kolben eines Geberzylinders einer Ausrückeinrichtung für eine Kupplung übertragen wird. Dieses Getriebe ist eingangsseitig mit dem Kupplungspedal und ausgangsseitig mit einem eine Kontur aufweisenden Konturenelement gekoppelt. Zur Übertragung eines vom Kupplungspedal ausgehenden Drehmomentes steht der Kolben mit der Kontur des Konturenelements in Wirkverbindung. Durch diese Anordnung wird es möglich, dass die auf den Kolben des Geberzylinders aufzubringende Pedalkraft über dessen Hub nicht linear sondern variabel ist, was zur Verbesserung des Pedalgefühls beim Fahrer eines Fahrzeuges führt.

Dazu ist der Kolben des Geberzylinders so gestaltet, dass sein Ende aus dessen Gehäuse herausragt, an dem eine Rolle oder Walze gelagert angeordnet ist. Über diese Rolle oder Walze steht der Kolben mit der Kontur des aus einem Teil bestehenden Konturenelements in Kontakt. Auf diese Weise wird die Kontaktreibung reduziert. Dieses Konturenelement ist auf der gleichen Welle gelagert wie das Kupplungspedal und auch um deren Drehpunkt schwenkbar gelagert.

In einer vorteilhaften Ausgestaltung der Erfindung wird die äußere Form des Konturenelements durch einen vom Drehpunkt ausgehenden, sich über den Drehwinkel ändernden Radius gebildet. Die so entstandene Form ist zunächst der einer Schnecke nachgebildet. Dabei bilden zwei unterschiedlich große Radien zwei Endstellungen. Die eine Endstellung wird durch das Ende eines Hakens definiert, mit dem die Schneckenform gewissermaßen abrupt endet um danach wieder in die Nähe des Drehpunktes die Kontur zu schließen. Insbesondere durch die hakenförmige Ausbildung der zweiten Endstellung bzw. des zweiten Anschlages für den Kolben kann Material eingespart werden, wodurch auch weniger Masse zur Betätigung des Kolbens zu bewegen ist.

Durch dieses speziell geformte Konturenelement kann das Übersetzungsverhältnis zwischen Pedalauslenkwinkel und Kolbenhub (Umwandlung einer Drehbewegung in eine Translationsbewegung) dadurch zusätzlich über dessen Hublänge variabel gestaltet werden. Damit variiert außerdem auch der Kraftaufwand am Kupplungspedal zur Betätigung des Kolbens über den Pedalauslenkwinkel.

Ebenso gut kann in einer vorteilhaften Ausgestaltung der Erfindung das mit einer Kontur versehene Konturenelement auf einer Grundplatte angeordnet sein, die als Adapter für das Konturenelement dient und um die Welle des Kupplungspedals schwenkbar ist. Auf diese Weise kann das mit einer Kontur versehene Konturenelement klein ausgeführt werden, wodurch ebenfalls Material eingespart werden kann. Wichtig ist jedoch, dass die Kontur möglichst verschleißfest und in der Stärke ausgebildet ist, dass sie den auftretenden Betriebsdrücken standhält. Außerdem kann sie nur auf einen bestimmten Bereich des Konturenelements beschränkt werden, nämlich dem Kontaktbereich, in dem das Kolbenende entlang bewegbar ist. Die Form der Kontur ist außerdem so auszubilden, dass sie der jeweiligen Kennlinie der Tellerfeder einer eingesetzten Kupplung angepasst ist.

Außer der bereits erwähnten Schneckenform kann die Kontur auch wellenförmig ausgebildet sein. In vorteilhafter Weise steht die Grundplatte über das Getriebe mit dem Kupplungspedal in Verbindung, um dadurch eine kontinuierliche Über- bzw. Untersetzung des jeweiligen Drehmomentes hinsichtlich des Abtriebs zu erhalten.

Zur Verringerung des für die Anordnung erforderlichen Bauraumes und Verringerung der Übertragungsverluste, beispielsweise durch Reibung, ist es ebenfalls vorteilhaft das Getriebe als Zahnradgetriebe auszuführen. Allerdings wäre auch ein anderes Getriebe, wie Schneckengetriebe, Koppelgetriebe usw. denkbar.

Das Zahnradgetriebe, das aus mehreren miteinander in Wirkverbindung stehenden Zahnrädern aufgebaut ist, besteht in vorteilhafter Weise aus Segmenten von Zahnrädern. Auf diese Weise wird unter Beibehaltung der Funktion des Getriebes der Material, Fertigungs- und damit Kostenaufwand gesenkt.

Zur Realisierung eines Untersetzungs- bzw. Übersetzungsverhältnisses sind zwischen den Zahnrädern bzw. Zahnsegmenten mehrere Übersetzungszahnräder angeordnet, die auf einer Zwischenwelle sitzen und zueinander lagefixiert sind. Vorteilhaft ist es, diese Übersetzungsräder ebenfalls als Zahnsegmente auszubilden, um somit wiederum außer den Platzbedarf zu reduzieren die Kosten zu senken.

Zur Übertragung eines durch Kraftbeaufschlagung auf das Kupplungspedal erzeugten Drehmoments ist es vorteilhaft, das Antriebszahnsegment drehfest mit diesem zu verbinden. Allerdings kann das Kupplungspedal auch so ausgeführt werden, dass es im Kontaktbereich zu einem Übertragungsrad mit einer Verzahnung oder einer entsprechenden Form versehen ist, die zur Gegenform des kontaktierenden Übertragungsgliedes komplementär ist.

Weiterhin ist es zur Kraft- bzw. Drehmomentübertragung auf den Kolben vorteilhaft, dass das Konturenelement mit einem Abtriebselement des verwendeten Getriebes drehfest verbunden ist.

Um den Geberzylinder innerhalb der hydraulischen Strecke ortsfest zu fixieren, wird dieser in einer Halteeinrichtung aufgenommen, die mit einer Pedalabstützung verbunden ist.

Zur Verringerung der erforderlichen Bauteile und damit des Bauraumes bei gleichzeitiger Gewährleistung der Kraft- bzw. Drehmomentübertragung, ausgehend vom Auslenkwinkel des Kupplungspedals auf den Kolben des Geberzylinders, sind die Wellen der jeweils miteinander in Eingriff stehenden Zahnräder bzw. Zahnsegmente in einer Ebene angeordnet und verlaufen vorzugsweise parallel zueinander.

Es zeigen:
- Figur 1: eine schematische Darstellung einer ersten Ausführungsform der erfindungsgemäßen Anordnung,
- Figur 2: eine perspektivische Teilansicht der erfindungsgemäßen Anordnung gemäß Figur 1,
- Figur 3: einen Ausschnitt der Teilansicht der erfindungsgemäßen Anordnung gemäß Figur 1 in einer Seitenansicht,
- Figur 4: eine zweite Ausführungsform der erfindungsgemäßen Anordnung, bei der sich das Kupplungspedal in Ruhestellung befindet,
- Figur 5: die erfindungsgemäße Anordnung gemäß Figur 4, bei der sich das betätige Kupplungspedal in voll ausgelenktem Zustand (Endstellung) befindet.

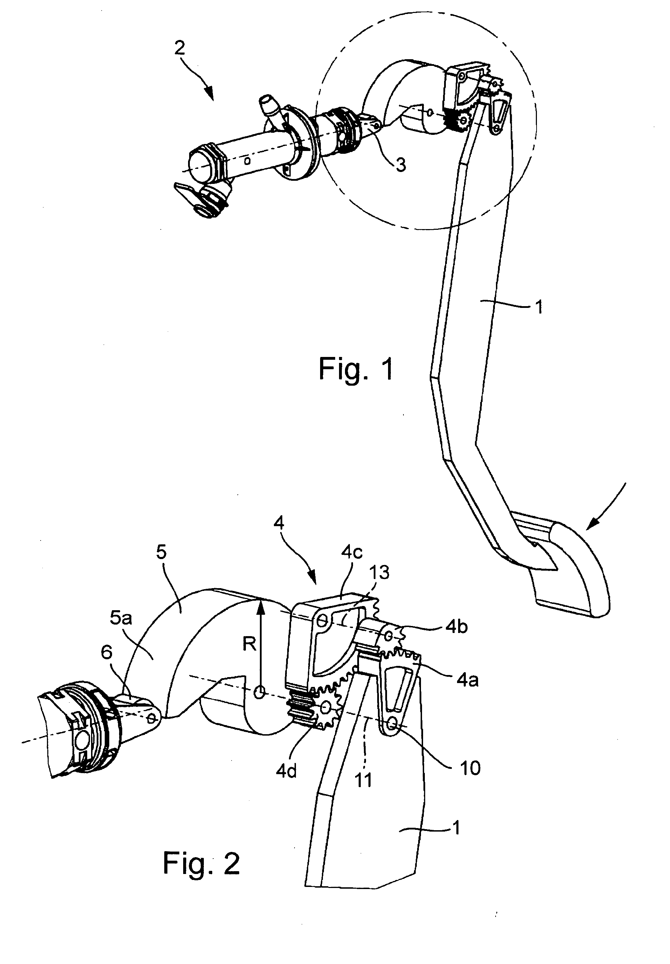

In Figur 1 wird eine erste Ausführungsform einer erfindungsgemäßen Anordnung zum Betätigen einer nicht dargestellten Kupplung eines Fahrzeuges perspektivisch gezeigt. Hierbei befindet sich das betätigte Kupplungspedal 1 in seiner Endstellung.

Eine Vergrößerung des Ausschnittes von Figur 1, in der die miteinander in Eingriff stehenden Bauteile dargestellt sind, wird in der Figur 2 gezeigt.

Hieraus ist die erfindungsgemäße Anordnung deutlich erkennbar, die ein Kupplungspedal 1 umfasst, dessen Bewegungen, vorzugsweise Schwenkbewegungen um einen Drehpunkt 10 einer Welle 11, mittels eines Getriebes 4, in diesem Falle einem Zahnradgetriebe, das mit einem Konturenelement 5 verbunden ist, übertragen wird. Somit wird das aus der Schwenkbewegung des Kupplungspedals 1 resultierende Drehmoment auf das Konturenelement 5 übertragen, das dadurch ebenfalls eine Schwenkbewegung ausführt. Dieses Konturenelement 5 steht über seine Außenkontur mit einem endseitig aus dem Gehäuse des Geberzylinders 2 herausragenden Kolben 3 eines nicht weiter dargestellten Ausrücksystems zur Betätigung einer Kupplung in Wirkverbindung. Dabei ist in das Ende des Kolbens 3 eine Rolle bzw. Walze 6. drehbar gelagert eingesetzt, so dass eigentlich zur Verminderung der Reibung die Rolle bzw. Walze 6 auf der Kontur 5a des Konturenelements 5 abrollt. Das Konturenelement 5 ist ebenfalls auf der Welle 11 angeordnet und um den Drehpunkt 10 drehbar gelagert. Die äußeren Form des Konturenelements 5 ist so gestaltet, dass sich ausgehend vom Drehpunkt 10, der gleichzeitig Ausgangspunkt eines Radius R ist, dieser entgegen dem Uhrzeigersinn stetig bis zur Erreichen eines vorbestimmten Maximalbetrages ansteigt. Mit der Größe des Maximalbetrages des Radius R wird gleichzeitig der Abstand zwischen der Welle 10 und dem Ende des Kolbens 3 bestimmt, der sich bei vollständig durchgedrücktem Kupplungspedal 1 in seiner Endstellung befindet. Bei nicht betätigtem Kupplungspedal 1 (nicht dargestellt) ist der Kolben 3 des Geberzylinders 2 vollständig ausgefahren und das Konturenelement 5 befindet sich, ebenso wie das Kupplungspedal 1, in seiner Ausgangsstellung, die einem kleineren Radius R entspricht. Das Zahnradgetriebe 4 umfasst in diesem Ausführungsbeispiel die in Verbindung stehenden bzw. ineinander kämmenden Zahnräder 4a bis 4b, die teilweise als Zahnsegmente ausgeführt sind. Zur Übertragung eines durch Betätigung des Kupplungspedals 1 in die Anordnung eingeleiteten Momentes ist zunächst das Antriebszahnsegment 4a fest mit dem Kupplungspedal 1 verbunden, in dem es von diesem in einer dafür vorgesehenen Ausnehmung aufgenommen wird. In diesem Beispiel wird das Antriebszahnsegment 4a in einer entsprechenden Aussparung des Kupplungspedals 1, vorzugsweise über eine Presspassung aufgenommen. Allerdings wäre es auch denkbar, das Kupplungspedal 1 so auszuführen, dass es im Kontaktbereich zur Form eines daran sich anschließenden Getriebes 4 komplementär gestaltet, beispielsweise in diesem Falle, mit einer Verzahnung versehen ist. Auf diese Weise könnte zumindest ein zusätzliches Bauteil eingespart und mögliche Übertragungsverluste durch eintretendes Spiel infolge Verschleiß zwischen den Bauteilen vermieden werden. Eine weitere Möglichkeit wäre, anstelle des Antriebszahnsegments 4a ein Zahnrad (oder auch nur ein Zahnsegment) auf der Welle 10 anzuordnen, das auf der Fläche des Kupplungspedals 1 mit diesem fest verbunden ist und dessen Drehpunkt mit dem Drehpunk 10 des Kupplungspedals 1 zusammenfällt. Dieses Antriebszahnsegment 4a steht mit einem Übersetzungsrad bzw. Zahnsegment 4b in Wirkverbindung, das auf einer Welle 13 angeordnet ist, auf der sich ein weiteres Übersetzungsrad 4c befindet. Die beiden Übersetzungsräder 4b und 4c sind in diesem Beispiel ebenfalls als Zahnsegmente ausgebildet und auf einer Welle 13 angeordnet, die in der gleichen Ebene wie die Welle 11 liegt, jedoch zu dieser parallel verläuft. Die Zähne des Antriebszahnsegments 4a kämmen in den Zähnen des Übersetzungsrades 4b und das Übersetzungsrad 4c steht mit seinen Zähnen mit dem Abtriebszahnrads 4d in Eingriff. Ausgehend von der Zähnezahl des Antriebszahnrades 4a zum Übersetzungsrad 4b findet zunächst eine Untersetzung statt, da das größere Antriebszahnrad 4a das kleinere Übersetzungsrad 4b antreibt, bei dem eine Teilumdrehung eine wesentlich weiter reichende Umdrehung des kleineren Übersetzungsrad 4b zur Folge hat. Das ebenfalls auf der Welle 13 sitzende Übersetzungsrad 4c, das einen wesentlich größeren Durchmesser und damit mehr Zähne aufweist als das von ihm angetriebene Abtriebszahnrad 4d, bewirkt wiederum eine Untersetzung. Das bedeutet, dass das infolge einer Betätigungskraft aufgebrachte Drehmoment durch die unterschiedlichen Drehzahlverhältnisse sehr feinfühlig auf das mit dem Abtriebszahnrad 4d verbundene Konturenelement 5 übertragbar ist. Andererseits wird beim Entspannen des Kolbens 3 das Konturenelement 5 in seine Ausgangsstellung zurückgeschwenkt, so dass das Getriebe 4 in umgekehrter Richtung von einem Drehmoment beaufschlag wird. In diesem Falle findet eine Übersetzung in Richtung Kupplungspedal 1 statt, wodurch mittels eines kleinen Drehwinkels eine große Auslenkung des Kupplungspedals 1 in seine Ausgangsstellung erreicht wird.

Wird die in den Figuren 1 und 2 dargestellte Endstellung des Kupplungspedals 1 durch Loslassen des Kupplungspedals 1 verlassen, übt das Kupplungspedal 1 eine Schwenkbewegung um den Drehpunkt 12 entgegen des Uhrzeigersinnes soweit aus, bis der in der hydraulischen Strecke aufgebaute Druck den Kolben 3 des Geberzylinders 2 in seine Ausgangsstellung bewegt hat. Dieser Druck des Kolbens 3, der über die Walze 6 auf das Konturenelement 5 übertragen wird, bewirkt gleichzeitig, dass dieses so lange entgegen dem Uhrzeigersinn bewegt wird, bis das mit diesem über das Zahnradgetriebe 4 in Verbindung stehende Kupplungspedal 1 seine Ausgangsstellung erreicht hat.

Wird das Kupplungspedal 1 und damit die Welle 11, wie in Figur 1 dargestellt, in Pfeilrichtung (Uhrzeigerrichtung) betätigt, d.h. mit einer Kraft beaufschlagt, wird infolge des Kämmens des Zahnsegments 4a mit dem Zahnsegment 4b die Welle 13 und damit auch das auf dieser drehfest angeordnete Zahnsegment 4c entgegen der Pfeilrichtung bewegt. Das auf der Welle 11 drehfest sitzende Konturenelement 5 schwenkt somit ebenfalls in Pfeilrichtung aus. In diesem Falle schwenkt das Konturenelement 5 von seiner Ausgangsstellung, die dadurch charakterisiert ist, dass der mit dem Ende des Kolbens 3 bzw. der Walze 6 in Kontakt stehende Radius R des Konturenelements 5 bzw. der Abstand der Welle 11 zum Umfang der Walze 6 so gering ist, dass der Kolben 3 in dieser Stellung voll entspannt ist, in seine Endstellung, die in den Figuren 1 und 2 gezeigt ist.

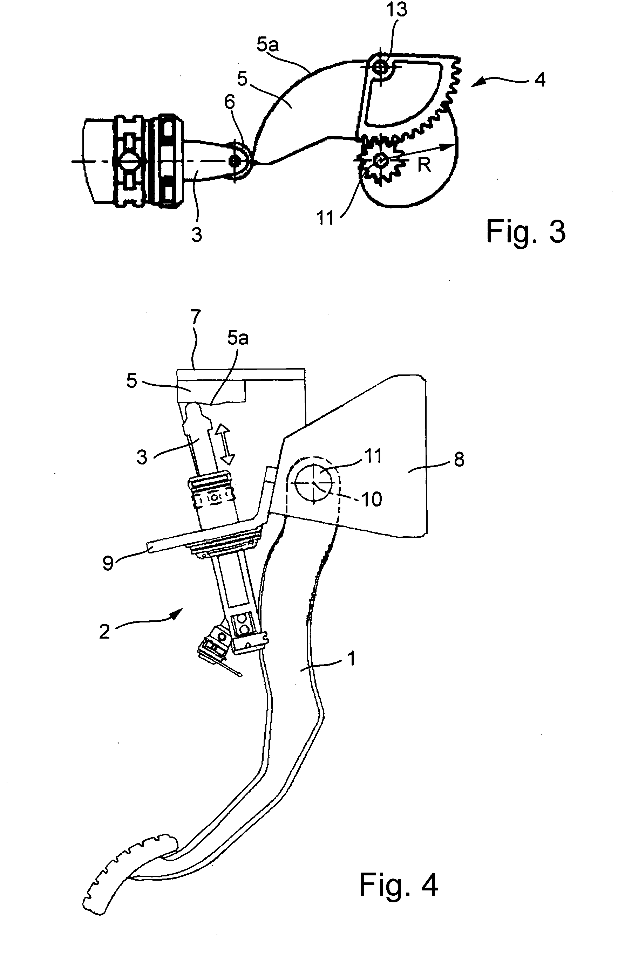

Ebenso ist diese Endstellung des Kupplungspedals 1 bzw. von Kolben 3 und Konturenelement 5 in der Figur 3 dargestellt. Im Unterschied zu den beiden vorher gehenden Figuren 1 und 2 wird hier die erfindungsgemäße Anordnung in einer Seitenansicht gezeigt, wobei die Anbindung an das Kupplungspedal weggefallen ist. Aus dieser Figur 3 ist ebenfalls ersichtlich, dass die Welle des Kolbens 3 vorzugsweise auf gleicher Höhe wie die Welle 11 des Zahnradgetriebes 4 angeordnet ist, um zu gewährleisten, das eine optimale Kraftübertragung stattfindet. Ebenfalls ist aus dieser Figur die Form des Konturenelements 5 deutlich erkennbar, die einer Schneckenform gleicht. Diese besondere Form wurde gewählt, da mit ihr einerseits stufenlos die beiden Anschlagstellungen (Ausgangs- und Endstellung) für den Kolben 3 realisierbar sind und andererseits Material und damit auch unnötige Masse eingespart werden können.

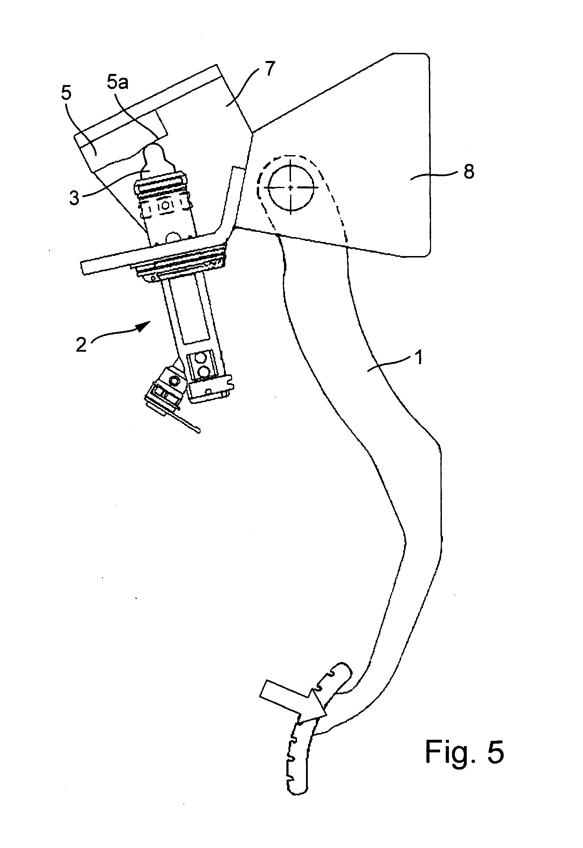

In den Figuren 4 und 5 ist eine weitere mögliche Ausgestaltung der erfindungsgemäßen Anordnung dargestellt. Für die gleichen Bauteile wurden dabei die Bezugszeichen aus den Figuren 1 bis 3 beibehalten.

Die Figur 4 zeigt ein Kupplungspedal 1 in unbetätigter Stellung (Ausgangsstellung), das über eine Welle 11 in einer Pedalabstützung 8 schwenkbar gelagert ist. An dieser Welle 11 ist im Winkel eine Grundplatte 7 angeordnet, die über ein nicht dargestelltes Getriebe (in den Figuren 1 bis 3 gezeigt) mit der Welle 11 drehbeweglich verbunden ist. Im Gegensatz zu diesen vorangegangenen Figuren dient diese Grundplatte 7 als Adapter für ein Konturenelement 5, das auf diesem so angeordnet ist, dass es über seine Kontur 5a in Kontakt mit einem Ende eines Kolbens 3 eines Geberzylinders 2 stehen kann. Die Kontur 5a dieses Konturenelementes 5 ist zumindest im Kontaktbereich zum Ende des Kolbens 3 wellenförmig ausgestaltet. Der Geberzylinder 2 der hydraulischen Strecke des hydraulischen Ausrücksystems wird in diesem Ausführungsbeispiel in einer Halteeinrichtung 9 aufgenommen, die mit der Pedalabstützung 8 fest verbunden ist. Die Verbindung zwischen der Halteeinrichtung 9 und der Pedalabstützung 8 kann beispielsweise je nach eingesetzten Materialien durch Schrauben, Schweißen, Kleben oder Ähnlichem hergestellt sein. Der Kolben 3 befindet sich in dieser Figur ebenfalls in seiner Ausgangsstellung, wobei er mit seinem Ende, das ebenso wie in den Figuren 1 bis 3 mit einer Rolle oder Walze versehen werden kann, mit dem linken Wellental der Kontur 5a in Kontakt steht.

Die Figur 5 zeigt das bis in seine Endstellung betätigte Kupplungspedal 1 aus Figur 4, wodurch der Kolben 3 des Geberzylinders 2 über ein Getriebe in seine Endstellung gebracht wird. Bei diesem Vorgang hat sich die Grundplatte 7 mit dem darauf angeordneten Konturenelement 5 ebenfalls um die Welle 11 bewegt, so dass das Ende des Kolbens 3 über den Wellenberg hinaus bewegt wurde, bis es schließlich mit dem rechten Wellental der Kontur 5a in Kontakt steht. Bei der Ausbildung der Kontur 5a ist zu allerdings zu beachten, dass diese der Kennlinie der entsprechend eingesetzten Tellerfeder einer Kupplung angepasst ist, damit ein möglichst gleich bleibender, kontinuierlicher Kraftverlauf über den Ausrück- bzw. Betätigungsweg des Kupplungspedals 1 erreicht wird, was zur Erhöhung des Fahrkomforts beiträgt.

### Bezugszeichenliste

- 1: Kupplungspedal
- 2: Geberzylinder
- 3: Kolben
- 4: Getriebe / Zahnradgetriebe
- 4a: Antriebszahnsegment
- 4b: zweites Zahnrad / zweites Zahnsegment (Übersetzungsrad)
- 4c: drittes Zahnrad / drittes Zahnsegment (Übersetzungsrad)
- 4c: Abtriebszahnrad
- 5: Konturenelement
- 5a: Kontur
- 6: Rolle / Walze
- 7: Grundplatte für Konturenelement
- 8: Pedalabstützung
- 9: Halteeinrichtung
- 10: Drehpunkt
- 11: Welle (Antriebs- /Abtriebswelle)
- 12:
- 13: Welle (Zwischenwelle)

- R: Radius
- Pfeil: Bewegungsrichtung

## Patentansprüche

1. Anordnung zum Betätigen einer Kupplung eines Fahrzeuges, bei der eine Schwenkbewegung eines Kupplungspedals (1) um einen Drehpunkt (12) einer Welle (11) über ein Getriebe (4) auf einen Kolben (3) eines Geberzylinders (2) einer Ausrückeinrichtung für eine Kupplung übertragbar ist, wobei an das Getriebe (4) ein eine Kontur (5a) aufweisendes Konturenelement (5) gekoppelt ist, **dadurch gekennzeichnet, dass** der Kolben (3) mit der Kontur (5a) des Konturenelements (5) in Wirkverbindung steht.

2. Anordnung nach Anspruch 1, **dadurch gekennzeichnet, dass** an dem aus dem Gehäuse des Geberzylinders (2) herausragenden Ende des Kolbens (3) mindestens eine Rolle oder Walze (6) gelagert angeordnet ist.

3. Anordnung nach Anspruch 1, **dadurch gekennzeichnet, dass** das Konturenelement (5) aus mindestens einem Element besteht, das auf der Welle (11) angeordnet und schwenkbar um einen Drehpunkt (10) gelagert ist.

4. Anordnung nach Anspruch 3, **dadurch gekennzeichnet, dass** die äußere Form des Konturenelements (5) durch einen vom Drehpunkt (10) ausgehenden, sich über den Drehwinkel ändernden Radius (R) gebildet wird.

5. Anordnung nach Anspruch 4, **dadurch gekennzeichnet, dass** mit Hilfe zweier vorbestimmter unterschiedlicher Radien (R) zwei Endstellungen des Kolbens (3) realisierbar sind.

6. Anordnung nach Anspruch 1, **dadurch gekennzeichnet, dass** das eine Kontur (5a) aufweisende Konturenelement (5) auf einem als Grundplatte (7) ausgebildeten Adapter angeordnet ist.

7. Anordnung nach Anspruch 6, **dadurch gekennzeichnet, dass** die Grundplatte (7) um die Welle (11) schwenkbar angeordnet ist.

8. Anordnung nach den Ansprüchen 1, 6 und 7, **dadurch gekennzeichnet, dass** die Grundplatte (7) über eine Vorrichtung (4) mit dem Kupplungspedal (1) in Verbindung steht.

9. Anordnung nach den Anspruch 6, **dadurch gekennzeichnet, dass** die Kontur (5a) des Konturenelements (5) innerhalb eines vorgegebenen Bereiches, der den Kontaktbereich für den Kolben (3) bildet, wellenförmig ausgebildet ist.

10. Anordnung nach den Ansprüchen 1, 2, 5 und 9, **dadurch gekennzeichnet, dass** der Kolben (3) entlang der Kontur (5a) des Konturenelements (5) bewegbar ist.

11. Anordnung nach den Ansprüchen 1 und 9, **dadurch gekennzeichnet, dass** die Kontur (5a) des Konturenelements (5) so ausgebildet ist, dass sie der Kennlinie der Tellerfeder einer jeweils eingesetzten Kupplung angepasst ist.

12. Anordnung nach Anspruch 1, **dadurch gekennzeichnet, dass** das Getriebe (4) ein Zahnradgetriebe ist.

13. Anordnung nach Anspruch 12, **dadurch gekennzeichnet, dass** das Zahnradgetriebe (4) aus mehreren miteinander in Wirkverbindung stehenden Segmenten von Zahnrädern (4a bis 4d) oder Zahnrädern besteht.

14. Anordnung nach Anspruch 12 und 13, **dadurch gekennzeichnet, dass** zwischen den Zahnrädern bzw. Zahnsegmenten (4a) und (4d) mehrere Übersetzungszahnräder, vorzugsweise die Zahnsegmente (4b) und (4c), auf einer Welle (13) zueinander lagefixiert angeordnet sind.

15. Anordnung nach den Ansprüchen 8, 10 und 11, **dadurch gekennzeichnet, dass** das Kupplungspedal (1) mit einem Element des Getriebes (4), vorzugsweise einem Antriebszahnsegment (4a) drehfest verbunden ist.

16. Anordnung nach den Ansprüchen 1, 8 und 12, **dadurch gekennzeichnet, dass** das Konturenelement (5) mit einem Element der Vorrichtung (4), vorzugsweise einem Abtriebszahnrad (4d), drehfest verbunden ist.

17. Anordnung nach Anspruch 1, **dadurch gekennzeichnet, dass** der Geberzylinder (2) in einer Halteeinrichtung (9) aufgenommen wird, die mit einer Pedalabstützung (8) verbunden ist.

18. Anordnung nach Anspruch 1 und 14, **dadurch gekennzeichnet, dass** die Wellen (11) und (13) in einer Ebene angeordnet sind und parallel zueinander verlaufen.
